# EUROPEAN PATENT SPECIFICATION

(11) **EP 0 739 997 B1**
(45) Date of publication and mention of the grant of the patent: **21.11.2001**
(21) Application number: 96105574.6
(22) Date of filing: 09.04.1996
(51) Int. Cl.: C23D 5/00

(54) **Method of protecting metal**
Verfahren zum Schützen von Metallen
Méthode de protection des métaux

(30) Priority: 24.04.1995 US 427381
(43) Date of publication of application: 30.10.1996
(73) Proprietor: CORNING INCORPORATED, Corning, N.Y. 14831 (US)
(72) Inventor: Kozlowski, Theodore Richard, c/o Corning Inc., Corning, NY 14831 (US); Noll, Frederick Ernest, c/o Corning Inc., Corning, NY 14831 (US); Quintal, Jose Mario, c/o Corning Inc., Corning, NY 14831 (US); Wasilewski, Michael Henry, c/o Corning Inc., Corning, NY 14831 (US)
(74) Representative: Reinhard - Skuhra - Weise & Partner

(56) References cited:
- EP-A- 0 080 345
- EP-A- 0 327 106
- EP-A- 0 414 458
- EP-A- 0 469 271
- GB-A- 1 467 459
- US-A- 5 250 360

## Description

The invention relates to a method of protecting a metal from embrittlement by carburization.

### BACKGROUND OF THE INVENTION

It is well known that certain metals, particularly iron-based alloys, tend to become brittle when in contact with carbon at elevated temperatures. This condition is commonly referred to as carburization of the metal. A similar effect from exposure to sulfur has been noted and referred to as sulfidation.

The former is better known and recognized. However, the latter has recently been discussed by J. Barnes et al. in an article entitled "Sulfur Effects on the Internal Carburization of Fe-Ni-Cr Alloys" at pages 333-349 of Vol. 26, Nos. 5/6, 1986, Oxidation of Metals. The authors observed the formation of a surface layer of chromium sulfide which reduced internal carburization, but became a problem itself.

It is evident that carbon and sulfide can behave in similar manner in attacking certain alloys. The present invention arose from an effort to protect against carburization, and the invention is described with reference thereto.

The problem of metal protection, particularly the protection of stainless steels used in elevated-temperature environments, is common to many industrial applications. A typical example is carburization, with or without oxidation, in stainless steel, resistance-heating elements and various components and fixtures of heating furnaces. The simultaneous carburization and oxidation of stainless steel heating elements basically results from precipitation of chromium as chromium carbide. This is followed by oxidation of the carbide particles, and is common in nickel-chromium and nickel-chromium-iron alloys. As reported by Barnes et al., chromium sulfide also forms when sulfur is present.

Another typical industrial example involves the carburization of certain petrochemical-plant components, such as heater tubes. These tubes may be subjected to carburization, oxidation, or both. These two processes generate uneven volume changes, which result in very high internal stresses, together with metal loss. They also cause embrittlement due to carbon pickup and consequent carbide formation. Ultimately, the carbide formation results in a loss of ductility that renders the component susceptible to brittle fracture. Heavy carburization also eliminates the possibility of repair welding. The present invention is described with particular reference to this application.

At the heart of a thermal cracking process is the pyrolysis furnace. This furnace comprises a fire box through which runs a serpentine array of tubing. This array is composed of lengths of tubing and fittings that may total several hundred meters in length. The array of tubing is heated to a carefully monitored temperature by the fire box.

A stream of feedstock is forced through the heated tubing under pressure and at a high velocity, and the product quenched as it exits. For olefin production, the feedstock is frequently diluted with steam. The mixture is passed through the tubing array which is commonly operated at a temperature of at least 750°C. During this passage, a carboniferous residue is formed and deposits on the tube walls and fittings.

The carbon deposits initially in a fibrous form. It is thought this results from a catalytic action primarily due to nickel and iron in the tube alloy. The fibrous carbon appears to form a mat on the tube wall. This traps pyrolitic coke particles that form in the gas stream. The result is build-up of a dense coke deposit on the tube wall. This carbon build-up is commonly referred to as "coking".

A short range concern is the thermal insulation of the tube wall. This necessitates continually increasing the fire box temperature to maintain a steady temperature in the hydrocarbon stream passing through the furnace. Ultimately, the fire box and tube wall reach temperatures where operation must be discontinued and the carbon removed in a procedure referred to as decoking.

A longer range concern is the effect of the carbon on the metal tubes in the cracking furnace. A gradual embrittlement of the metal is observed with consequent loss of mechanical strength. Since the operation is conducted under considerable pressure and tensile load, the danger of tube rupture arises. Both pressure and tensile load tend to be relatively constant factors. However, as a metal tube becomes weak due to embrittlement, these factors become significant. It then becomes necessary to shut the operation down and completely rebuild the furnace with new tubing.

Numerous solutions to the problems of coking and carburization have been proposed. One such solution involves producing the tubing from metal alloys having special compositions. Another proposed solution involves coating the interior wall of the tubing with a silicon containing coating such as silica, silicon carbide, or silicon nitride. Despite these numerous proposals, the problems still remain.

It would obviously be highly beneficial to be able to at least slow down the embrittlement process, and thus extend the life of the cracking furnace. It is a purpose of this invention to accomplish that desirable end. In a broader sense, a purpose is to provide a method of protecting metal alloys against embrittlement by contact with carbon at elevated temperatures.

US-A-5 250 360 discloses a coated article composed of a metal alloy substrate, the metal alloy having a nickel, chromium, cobalt or iron base, and a coating that serves as an oxygen barrier to insulate the metal surface from oxygen attack at temperatures which may range up to 1200°C. The coating comprises a glass-ceramic selected from barium silicate and strontium silicate systems characterized by additives that enable forming a continuous well flowed glass coating prior to setting of the coating by crystallization.
These additives include the refractory oxides Al₂O₃, ZrO₂ and Y₂O₃, the transition metal oxides MnO, CoO, NiO and FeO, and MgO.

EP-A-0 414 458 relates to glass compositions for providing protective coatings on intermetallic substrates. The coating serves as a chemical barrier against oxidation of the substrate by corrosive agents in the environment, as well as a thermal barrier to prevent rapid heatup of the substrate.

### SUMMARY OF THE INVENTION

The invention resides in a method of protecting a metal against embrittlement by carburization when the metal is exposed to carbon at an elevated temperature, the method comprising forming a thin, adherent, continuous coating of a glass-ceramic on the surface of the metal prior to exposure at an elevated temperature by applying a coating material capable of forming an adherent, continuous, non-porous coating of glass-ceramic to the metal surface, heating the coated metal to a first temperature at which the glass flows to form a continuous, essentially non-porous coating on the metal, cooling to a lower, second temperature, and holding at that temperature to convert the glass to a glass-ceramic.

The present invention further relates in claim 6 to a method of protecting an alloy containing chromium against carbide formation within the alloy surface when the alloy is exposed to an envivonment containing carbon at an elevated temperature.

Further, the present invention comprises a method of preventing carbide formation within a metal surface according to claim 7.

Preferred embodiments are claimed in claims 2 to 5.

### BRIEF DESCRIPTION OF THE DRAWING

FIGURE 1 is a front elevation view, partly broken away, showing a metal tube protected in accordance with the invention.

FIGURES 2 and 3 are photomicrographs showing in cross-section a metal test piece coated in accordance with the invention.

### DESCRIPTION OF THE INVENTION

The invention employs a thin coating of a selected glass-ceramic to act as a barrier layer between carbon and a metal that is subject to carburization. This barrier greatly minimizes carburization, thus keeping a metal ductile and extending its life in a furnace for example.

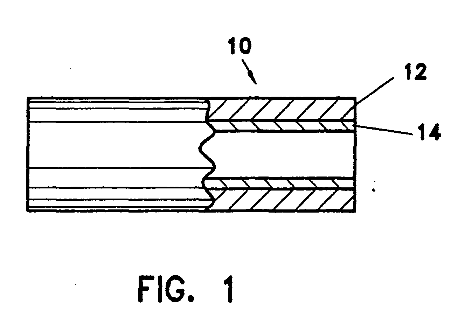

FIGURE 1 is a front elevational view, partly broken away, of a segment 10 of a commercial reactor tube. Such a commercial tube may be up to 12 meters (40 ft.) in length and have a diameter of 2.5-20 cm (1"-8"). Segment 10 comprises a cast alloy tube 12 having a glass-ceramic coating 14 on its inner surface. It will be appreciated that a cracking furnace will comprise tubes and fittings, such as elbows, connecting adjacent lengths of tubing. It is contemplated that a complete cracking furnace, including tubes and fittings, will be coated in accordance with the invention. However, short lengths of tubing may be coated and joined, as by welding.

Accordingly, the invention is described with particular reference to iron-based alloys, such as austenitic-type alloys used in reactor tubes for thermal cracking furnaces. Such iron-based alloys have been observed to be particularly susceptible to carburization. However, carburization may occur in any thermal environment where a metal alloy is exposed to carbon. Accordingly, the invention is also applicable to such other processes as well.

The composition, as well as the physical properties, of the glass-ceramic will depend on the particular application involved. For example, any element known to be poisonous, or otherwise detrimental, to a process should be avoided in the composition. Also, the glass-ceramic must not soften, recrystallize, or otherwise undergo detrimental change at the maximum operating temperature in use.

As initially applied to the metal, the coating is a flowable material composed essentially of the precursor glass in particulate form. This coating is dried and heated to a ceramming temperature for the glass. During this heating, and prior to complete ceramming, the glass must become sufficiently fluid so that it forms a continuous, essentially non-porous coating. The ceramming temperature should be well below that at which the metal undergoes structural modification or other change.

Another consideration is a reasonable match in coefficient of thermal expansion (CTE) between the glass-ceramic and the metal which it coats. This becomes particularly important where austenitic-type metals are employed, since these metals tend to have high CTEs on the order of 180x10⁻⁷/°C. In such case, a relatively high silica content is desirable. This provides a cristobalite crystal phase, the inversion of which creates an effective CTE that provides an adequate expansion match.

The presence of alumina in the composition is beneficial to increase glass flow and surface wetting prior to crystallization of the frit. However, it may inhibit cristobalite formation as the frit crystallizes.

Where the feedstock is diluted with another material, the coating must be unaffected by the diluent. For example, hydrocarbon cracking is usually carried out in the presence of steam. In that case, the coating must not interact with the steam, either physically or chemically.

In summary, a glass-ceramic suited to present purposes should exhibit these characteristic features:
1. Have a composition free from elements detrimental to any given process.
2. Capable of withstanding an operating temperature of at least 850°C without undergoing appreciable physical or chemical change.
3. Thermal expansion characteristics compatible with austenitic-type metals.
4. Having a ceramming temperature below a temperature at which the coated metal undergoes change.
5. Form an adherent, continuous, non-porous coating.

Any glass-ceramic material that meets these several conditions may be employed. The alkaline earth metal borates and borosilicates and alkaline earth metal silicates are particularly suitable. In general, alkali metal silicates and aluminosilicates are less suitable due to physical and/or chemical incompatibility. They tend to have low coefficients of thermal expansion, and alkali metals are incompatible with some processes. However, alkali metals are commonly present as impurities and may be tolerated as such.

Our preferred coating is a barium aluminosilicate or strontium aluminosilicate glass-ceramic. The barium aluminosilicate will have a primary crystal phase of sanbornite and minor phases of cristobalite and BaAl₂SiO₅ and will contain 20-65 % BaO, 25-65 % SiO₂ and up to 15 % Al₂O₃. The strontium aluminosilicate will contain a primary crystal phase of SrSiO₃ and a minor phase of cristobalite and will contain 20-60% SrO, 30-70% SiO₂ and up to 15% Al₂O₃.

TABLE I sets forth, in weight percent on an oxide basis as calculated from the precursor glass batch, the compositions for several different glass-ceramics having properties that adapt them to use for present purposes. Examples 1-6 illustrate alkaline earth metal alumino borates or borosilicates. Examples 7-14 illustrate alkaline earth metal silicates which may contain minor amounts of alumina or zirconia.

**TABLE I**

| Ex. | SiO₂ | B₂O₃ | Al₂O₃ | BaO | MgO | CaO | ZnO | ZrO₂ | MnO | SrO | NiO |
|---|---|---|---|---|---|---|---|---|---|---|---|
| 1 | -- | 19.1 | 27.9 | 42.0 | 11.0 | -- | -- | -- | -- | -- | -- |
| 2 | -- | 25.4 | 18.6 | 56.0 | -- | -- | -- | -- | -- | -- | -- |
| 3 | 17.5 | 20.2 | 29.7 | -- | -- | 32.6 | -- | -- | -- | -- | -- |
| 4 | 9.6 | 22.2 | 32.5 | -- | -- | 35.8 | -- | -- | -- | -- | -- |
| 5 | 30.6 | 12.7 | 3.8 | 15.9 | 23.5 | -- | 13.5 | -- | -- | -- | -- |
| 6 | -- | 27.0 | 19.8 | 29.7 | 7.8 | -- | 15.8 | -- | -- | -- | -- |
| 7 | 32.0 | -- | -- | 40.9 | -- | -- | -- | 8.2 | 18.9 | -- | -- |
| 8 | 33.9 | -- | 2.9 | 43.3 | -- | -- | -- | -- | 20.0 | -- | -- |
| 9 | 33.2 | 4.8 | -- | 42.4 | -- | -- | -- | -- | 19.6 | -- | -- |
| 10 | 65.0 | -- | 6.9 | -- | -- | -- | -- | -- | -- | 28.1 | -- |
| 11 | 47.2 | -- | -- | -- | -- | -- | -- | 12.1 | -- | 40.7 | -- |
| 12 | 54.1 | -- | 5.7 | -- | -- | -- | -- | -- | -- | 23.3 | 16.8 |
| 13 | 38.3 | -- | -- | -- | -- | -- | -- | 5.9 | 22.7 | 33.1 | -- |
| 14 | 62.7 | -- | 5.3 | 32.0 | -- | -- | -- | -- | -- | -- | -- |

Comparative tests were made on samples prepared as glass-ceramic coupons and as coatings on 5 cm (2") long coupons of an Fe-Cr-Ni alloy containing 0.45 % carbon (HP-45 alloy). The metal pieces were cut from a pyrolysis furnace tube. To guard against pin holes, the coatings had a thickness of at least about 0.0375 mm (1.5 mils). Much thicker coatings may be employed, but no advantage is seen.

Successful tests led to determining compatibility and effectiveness of glass-ceramic coatings with austenitic cast alloys of the type used in cracking furnace tubes. Accordingly, tests were made on coupons which were cut from lengths of commercial tubing and were 5 cm (2") in length and 1.2-2.5 cm (1/2-1") wide.

Test samples were cut from coupons of three commercial Fe-Cr-Ni alloys: HP-40, HP-45 and HK-40. These alloys contain a minor amount of carbon, indicated in hundredths of a percent by the numeral in the designation, as well as certain other minor alloy constituents.

Two precursor glasses were used in forming the glass-ceramic coatings. One glass had the composition of Example 14; the other was composed of 53.5% SiO₂, 39.0% BaO and 6.5% Al₂O₃. A kilogram (2 pound) melt of each glass was made in a furnace operating at 1600°C for four hours. Each melt was dri-gaged, that is, poured into water to quench the glass and cause it to fracture into particles. With subsequent larger melts, the molten glass was rolled to form a thin sheet which was then crushed.

To prepare a coating slurry, the broken glass was dry ball milled with alumina media for 8 hours in an alumina container. This reduced the glass to an 8 µm (micron) average particle size. Separately, a polybutyl methacrylate binder was mixed with equal parts of ethyl and amyl acetate to form a homogeneous vehicle.

The frit powder, in a ratio of 2.5 grams to 1 gram of binder, was added to the vehicle and rolled with zirconia balls in a plastic container to form a coating slip. It will be appreciated that the particular binder and vehicle are not critical, and the proportions would be adjusted for any given coating operation. The coating slip was applied to the inside wall of a tubing sample by repeatedly dipping the sample in the coating and drying to provide a coating having a thickness of about 200 mg coating/6.5 sq. cm (1 sq. in.).

The coated tube sample was then heated to cause the glass frit to soften and flow sufficiently to adhere to the metal. Further heating cerammed the glass, that is, converted it by thermal crystallization to a glass-ceramic. This involved heating the coated samples to 500°C; holding one hour; heating to 1150°C; cooling to 1050°C at furnace rate; holding 4 hours; and cooling to ambient. During this cycle the samples were supported by refractory supports.

Adherence of the coating was tested by making a saw cut in the glass-ceramic. This test is based on a finding that poorly adhering coatings quickly spall when touched by a saw. The coatings tested were considered to show good adherence.

Service life was tested by thermal cycling. In this test, the coated sample was held for 110 minutes at 850°C. It was then removed from the heating chamber for 10 minutes. During this time, it dropped to a temperature well below red heat. After 24 cycles, the samples were cooled and a portion of the coating removed by partial masking and grit blasting. Then, the partially coated samples were subjected to another 24 cycles. No spalling of the coating occurred on any of the samples tested even after partial coating removal.

The effect of particle size of the glass frit was determined by preparing slurries with mean particle sizes of 5.92, 8.25, 18.62 and 26.21 µm (microns) These slurries were applied to test pieces of HP-45 metal tubes and subjected to a ceramming cycle. One set was heated to a top temperature of 1150°C; a second set was heated to a top temperature of 1200°C.

The coatings prepared with the two larger size particles were inferior to the coatings produced with the smaller particle size material. Based on these tests, a coating material prepared with a glass frit having a mean particle size not over about 10 µm (microns) is preferred.

Tests conducted on coatings of varying thickness indicate that a fired glass-ceramic coating of 0.0375-0.250 mm (1.5-10 mils) thickness is preferable. With a lesser thickness, full coverage of the surface is not always obtained and thin spots tend to appear. With greater thicknesses, there is a tendency to spall on heat cycling.

To test for carburization, coupons were partly coated with glass-ceramic. That is, a portion of a coupon was coated and the remainder left bare. The test samples were packed in carbon within a closed end Inconel sleeve. They occupied over half of the volume with the remainder packed with steel wool as a "getter" for oxygen. The open end was then closed and the assembly placed in a small electric furnace. The furnace was heated to 1100°C and held at that temperature for 250 hours.

When the test samples were removed, it was observed that a heavy carbide coating had formed on the uncoated (exposed portion) of the test samples as well as on the Inconel sleeve. SEM photomicrographs revealed no evidence of carburization of the metal under the glass-ceramic coating. The exposed metal had carburized to a depth of about 400 µm (microns).

A further test on correspondingly coated samples was then carried out employing the same test procedure, but at a test temperature of 850°C and a test time of 500 hours. Again, SEM photomicrographs showed no carburization of the metal under the coating. The bare or exposed metal had carburized to a depth of about 40 µm (microns).

A second test was conducted using the same test procedure and metal test pieces coated in the same manner. In this test, the temperature was maintained at a temperature of 1000°C for 250 hours. As in the previous tests, the coated portions of the test pieces showed no evidence of carburization. The uncoated, exposed portions of the test pieces showed carburization to a depth of about 150 µm (microns)

The applicability of the invention to metal alloys in general was demonstrated by conducting the test just described on a series of coupons of different metal alloys. These included 304 SS, Inconel, and 420 SS together with HP-45. Coupons of each alloy were coated with the glass-ceramics of both Example 12 and Example 14. Thus, seven tests were conducted, one sample having been lost in process.

After each test, no carburization could be measured under the coated portion of the coupon. Varying depths were measured on the bare or exposed portions of the coupons. These measured depths are shown in TABLE II in µm (microns)

**TABLE II**

| Alloy | Ex. 12 | Ex. 14 |
|---|---|---|
| 304 SS | 100 | -- |
| HP-45 | 170 | 150 |
| Inconel | 50 | 50 |
| 420 SS | 120 | 80 |

It is evident that the glass-ceramic coating protected the alloy against carburization in all cases. However, the greatest need for protection occurred with the HP-45 alloy.

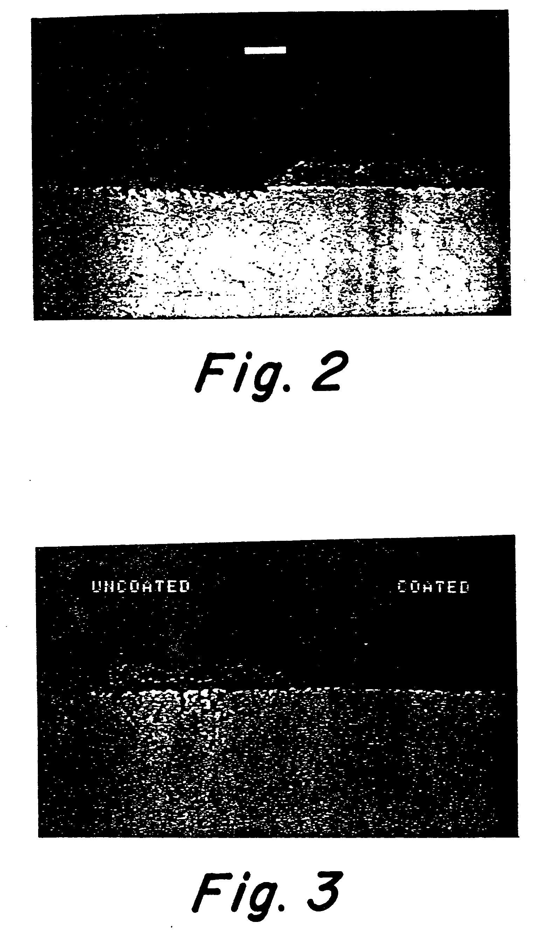

The effectiveness of the invention in minimizing carburization is further illustrated in FIGURES 2 and 3 of the accompanying drawings. These FIGURES are photomicrographs at a 100X magnification of cross sections of test pieces described above. FIGURES 2 and 3 show, respectively, a test piece treated for 500 hours at 850°C and a test piece treated for 250 hours at 1000°C.

Each FIGURE shows a metal test piece, the lower portion of the picture being a cross section of the test piece. In each case, the right hand half of the metal surface was provided with a glass-ceramic coating. FIGURE 2 shows the coating in place, whereas in FIGURE 3 the coating was removed following the test.

Likewise, the left hand half of each FIGURE shows the condition of the exposed, that is uncoated, metal surface after the test. In each picture, a typical carburized condition is observed. It was observed that a crust formed on the metal surface and that carbon penetrated along grain boundaries in the metal. Presumably, this resulted from chromium migrating from the grain boundaries to react with carbon as reported in the literature.

## Claims

1. A method of protecting a metal against embrittlement by carburization when the metal is exposed to carbon at an elevated temperature, the method comprising forming a thin, adherent, continuous coating of a glass-ceramic on the surface of the metal prior to exposure at an elevated temperature by applying a coating material capable of forming an adherent, continuous non-porous coating of glass-ceramic to the metal surface, heating the coated metal to a first temperature at which the glass flows to form a continuous, essentially non-porous coating on the metal, cooling to a lower, second temperature, and holding at that temperature to convert the glass to a glass-ceramic.

2. A method in accordance with claim 1 wherein the glass-ceramic coating contains a cristobalite crystal phase.

3. A method in accordance with claim 1 or 2 wherein the glass-ceramic coating contains a crystal phase selected from a group composed of alkaline earth metal silicate, alkaline earth metal aluminoborosilicate and alkaline earth metal aluminoborate crystal phases.

4. A method in accordance with claim 1 which comprises preparing a slurry of a finely divided frit of the precursor glass for the glass-ceramic, coating the metal surface with a thin layer of the slurry, drying the coating and heating it to adhere the coating to the metal and to convert the glass to a glass-ceramic.

5. A method in accordance with claim 1 wherein the glass-ceramic formed on the metal remains essentially unchanged physically or chemically at the elevated temperature to which the metal is exposed, but has a ceramming temperature below a temperature at which the metal undergoes change.

6. A method of protecting an alloy containing chromium against carbide formation within the alloy surface when the alloy is exposed to an environment containing carbon at an elevated temperature, the method comprising isolating the surface of the alloy from the environment with a thin, adherent, continuous coating of a glass-ceramic prepared according to any of claims 1 to 5.

7. A method of preventing carbide formation within a metal surface and consequent embrittlement of the metal when carbon collects on that metal surface, the method comprising forming a thin, adherent, continuous coating of a glass-ceramic, prepared according to any of claims 1 to 5, on the surface of the metal prior to the carbon collecting.

## Patentansprüche

1. Verfahren zum Schützen eines Metalles gegen ein Brüchigwerden durch Karburierung, wenn das Metall bei einer erhöhten Temperatur Kohlenstoff ausgesetzt wird, wobei das Verfahren das Bilden einer dünnen, fest haftenden, kontinuierlichen Beschichtung einer Glaskeramik auf der Oberfläche des Metalles vor dem Aussetzen bei einer erhöhten Temperatur umfaßt, indem eine Beschichtung eines Materials, das zur Bildung einer fest haftenden, kontinuierlichen, nicht-porösen Beschichtung einer Glas-Keramik in der Lage ist, auf die Metalloberfläche aufgebracht wird, indem das beschichtete Metall auf eine erste Temperatur erhitzt wird, bei der das Glas zur Bildung einer kontinuierlichen, im wesentlichen nicht-porösen Beschichtung auf dem Metall fließt, indem auf eine niedrigere, zweite Temperatur abgekühlt wird und indem diese Temperatur gehalten wird, um das Glas in eine Glaskeramik umzuwandeln.

2. Verfahren nach Anspruch 1, bei dem die Glaskeramik-Beschichtung eine Cristobalit-Kristallphase enthält.

3. Verfahren nach Anspruch 1 oder 2, bei dem die Glaskeramik-Beschichtung eine Kristallphase enthält, die aus einer Gruppe ausgewählt ist, die aus Erdalkalimetallsilikat-, Erdalkalimetallaluminiumborosilikat- und Erdalkalimetall-aluminiumborat-Kristallphasen zusammengesetzt ist.

4. Verfahren nach Anspruch 1, das die Herstellung einer Aufschlämmung von fein verteilten Fritten des Vorläuferglases für die Glas-Keramik, ein Beschichten der Metalloberfläche mit einer dünnen Schicht der Aufschlämmung, ein Trocknen der Beschichtung und ein Erhitzen von dieser umfasst, um die Beschichtung an dem Metall anzuhaften und um das Glas in eine Glaskeramik umzuwandeln.

5. Verfahren nach Anspruch 1, bei dem die auf dem Metall gebildete Glaskeramik bei der erhöhten Temperatur, der das Metall ausgesetzt wird, im wesentlichen physikalisch oder chemisch unverändert bleibt, jedoch eine Keramik-Bildungstemperatur aufweist, die unterhalb einer Temperatur liegt, bei der das Metall eine Veränderung durchmacht.

6. Verfahren zum Schützen einer Legierung, die Chrom enthält, gegen eine Carbid-Bildung innerhalb der Oberfläche der Legierung, wenn die Legierung bei einer erhöhten Temperatur einer Umgebung ausgesetzt wird, die Kohlenstoff enthält, wobei das Verfahren ein Isolieren der Oberfläche der Legierung von der Umgebung mit einer dünnen, fest anhaftenden, kontinuierlichen Beschichtung einer Glaskeramik, die nach einem der Ansprüche 1 bis 5 hergestellt ist, umfaßt.

7. Verfahren zum Vermeiden einer Carbid-Bildung innerhalb einer Metalloberfläche und eines darauf folgenden Brüchigwerdens des Metalles, wenn sich Kohlenstoff auf der Metalloberfläche ansammelt, wobei das Verfahren das Bilden einer dünnen, fest anhaftenden, kontinuierlichen Beschichtung einer Glaskeramik, die nach einem der Ansprüche 1 bis 5 hergestellt ist, auf der Oberfläche des Metalles vor dem Ansammeln des Kohlenstoffs umfaßt.

## Revendications

1. Méthode de protection d'un métal contre la fragilisation par carburisation lorsque le métal est exposé au carbone à une température élevée, ladite méthode comprenant les étapes consistant à former un revêtement fin, adhérent et continu en vitrocéramique sur la surface du métal avant l'exposition, à une température élevée en appliquant une matière de revêtement capable de former un revêtement adhérent, continu et non poreux en vitrocéramique sur la surface métallique, à chauffer le métal revêtu à une première température, à laquelle le verre s'écoule pour former un revêtement continu, essentiellement non poreux sur le métal, à le refroidir à une seconde température plus basse, et à le maintenir à cette température pour convertir le verre en vitrocéramique.

2. Méthode selon la revendication 1, dans laquelle le revêtement en vitrocéramique contient une phase cristalline de cristobalite.

3. Méthode selon la revendication 1 ou 2, dans laquelle le revêtement en vitrocéramique contient une phase cristalline choisie parmi un groupe constitué par les phases cristallines de silicates de métaux alcalino-terreux, d'aluminoborosilicates de métaux alcalino-terreux et d'aluminoborates de métaux alcalino-terreux.

4. Méthode selon la revendication 1 qui comprend la préparation d'une pâte d'un fritté finement divisé d'un verre précurseur pour la vitrocéramique, l'enduction de la surface métallique avec une fine couche de la pâte, son séchage et son chauffage pour faire adhérer le revêtement sur le métal et convertir le verre en vitrocéramique.

5. Méthode selon la revendication 1, dans laquelle la vitrocéramique formée sur le métal reste essentiellement inchangée physiquement ou chimiquement à la température élevée à laquelle le métal est exposé, mais ayant une température de céramisation en dessous de la température à laquelle le métal subit des modifications.

6. Méthode de protection d'un alliage contenant du chrome contre la formation de carbure à l'intérieur de la surface de l'alliage lorsque l'alliage est exposé à un environnement contenant du carbone à une température élevée, la méthode comprenant l'isolation de la surface de l'alliage de l'environnement avec un revêtement fin, adhérent et continu en vitrocéramique préparé selon l'une quelccnque des revendications 1 à 5.

7. Méthode destinée à empêcher la formation de carbure à l'intérieur d'une surface métallique et la fragilisation consécutive du métal quand le carbone se collecte sur la surface métallique, la méthode comprenant la formation d'un revêtement fin, adhérent et continu en vitrocéramique préparé selon l'une quelconque des revendications 1 à 5 sur la surface du métal avant la collecte du carbone.
